# EUROPÄISCHE PATENTANMELDUNG

(11) **EP 0 643 544 A1**
(43) Veröffentlichungstag der Anmeldung: **15.03.1995**
(21) Anmeldenummer: 94113496.7
(22) Anmeldetag: 30.08.1994
(51) Int. Cl.: H04Q 7/32, H04B 1/38

(54) **Handfunktelefon**

(30) Priorität: 15.09.1993 DE 4331216
(71) Anmelder: Alcatel SEL Aktiengesellschaft, D-70435 Stuttgart (DE)
(72) Erfinder: Ludwig, Hans, D-71729 Erdmannhausen (DE)
(74) Vertreter: Pohl, Herbert, Dipl.-Ing

(57) **Zusammenfassung**

Das Handfunktelefon (1) ist auf der Rückseite des Gehäuses (10) mit einer Solarzelle (2) versehen. Letztere wird von aufgedampftem, amorphem Solarzellenmaterial gebildet. Die Solarzelle (2) kann direkt auf dem Gehäuse oder auf einem Schieber (4) aufgebracht sein, der nachrüst- und austauschbar in Führungsschienen (3) des Gehäuses (10) eingesetzt werden kann.

## Beschreibung

Die Erfindung betrifft ein Handfunktelefon nach dem Oberbegriff des Anspruchs 1.

Es ist bekannt, für Handfunkgeräte Solarmodule bereitzustellen, die mittels eines Kabels anschließbar sind und als Stromversorgung dienen (Funkschau, Heft 17/93, Seite 7).

Die Nickel-Cadmium- oder Nickel-Hydrid-Akkumulatoren handelsüblicher Handfunktelefone für das C- und D-Netz müssen nach Gebrauch im mitgelieferten Tischladegerät eingesteckt für mehrere Stunden geladen werden, um wieder zwischen etwa 30 bis über 100 Minuten zum Sprechen eingesetzt werden zu können. Das erwähnte Solarmodul erlaubt, dem Sonnen- oder Kunstlicht ausgesetzt und mit dem vom Tischladegerät abgesetzt betriebenen Handfunktelefon über ein Ladekabel verbunden, ein gewisses Nach laden von dessen Zellen. Jedoch ist es umständlich, dieses Solarmodul immer mit dem Handfunktelefon dorthin tragen zu müssen, wo das Handfunktelefon eingesetzt werden soll. Zudem dürfte nach einer größeren Anzahl von Bewegungen auch das Ladekabel entweder am Austritt aus dem Solarmodul oder am Eintritt in das Handfunktelefon abgeknickt und damit unbrauchbar werden.

Der Erfindung liegt die Aufgabe zugrunde, ein Handfunktelefon zu schaffen, bei dem ein unbehindertes Nach laden der Akkumulatoren auf einfache Weise möglich ist. Gelöst wird diese Aufgabe durch die im Anspruch 1 angegebenen Merkmale. Weiterbildungen sind den Unteransprüchen zu entnehmen. Vorteilhaft an dieser Lösung ist die leichte Handhabung, denn es muß kein separates Solarmodul neben dem Handfunktelefon transportiert werden. Außerdem entfällt das zuvor benötigte Verbindungskabel und damit auch dessen Störanfälligkeit.

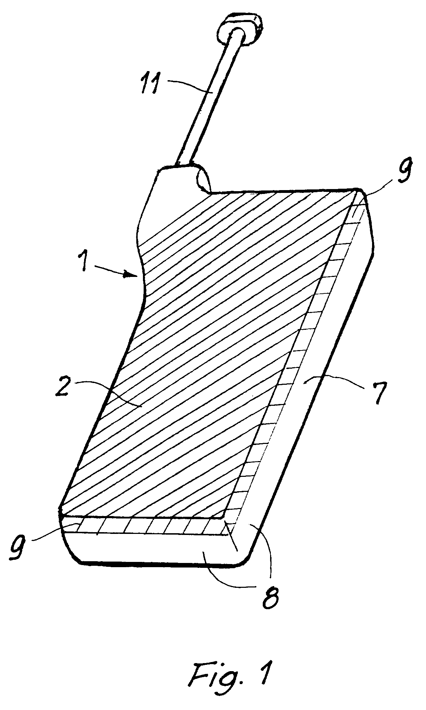

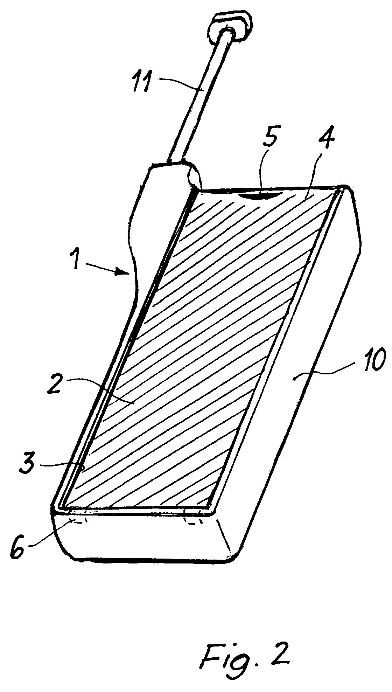

Die Erfindung wird an Ausführungsbeispielen beschrieben, die in den zugehörigen Zeichnungen dargestellt sind. Die Figuren 1 und 2 zeigen jeweils die Rückseite eines Handfunktelefons mit einer Solarzelle, in persepktivischer Ansicht.

Das Handfunktelefon 1 nach den Fig. 1 und 2 hat zum Beispiel ein rechteckiges oder quaderförmiges Gehäuse 7 oder 10 mit einer nach oben ausziehbaren Antenne 11 an einer der Schmalseiten. Die Gestaltung der Vorderseite, die die Bedien- und Anzeigeelemente enthält, ist im vorliegenden Zusammenhang ohne Bedeutung und wird daher nicht näher erläutert.

Außer einer im Gehäuse 7, 10 untergebrachten Stromversorgung, die mindestens einen Akkumulator umfaßt (nicht dargestellt), hat das Funktelefon 1 eine weitere Stromquelle. Diese besteht aus wenigstens einer Solarzelle 2, die sich auf freien Flächen des Gehäuses 7, 10 befindet. Die aus fotovoltaisch reagierendem Material gebildeten Schichten der Solarzelle 2 sind auf den in den Fig. 1 und 2 abgebildeten Rückseiten der Gehäuse 7, 10 vorgesehen.

Die Beschichtung kann direkt auf die Rückwand des aus Kunststoff bestehenden Gehäuses 7 aufgebracht, z.B. aufgedampft oder aufgeklebt sein, wie es die Ausführung nach Fig. 1 zeigt, wobei sich die Solarzelle 2 auch auf wenigstens einen Teil 9 der Seitenwände 8 des Gehäuses erstrecken kann.

Entsprechend der in Fig. 2 dargestellten Ausführung ist die Solarzelle 2 auf einen Schieber 4 aus Kunststoff oder anderem Material aufgedampft, der auf der Rückseite des Gehäuses 10 in angeformte Führungsschienen 3 eingeschoben ist. Eine Fingermulde 5 im Schieber 4 erleichtert dabei seine Handhabung. In den Führungsschienen 3 sind zwei Kontakte 6 als Anschlüsse der Stromversorgungsschaltung des Handfunktelefons 1 angebracht, mit denen die Stromausgänge der Solarzelle 2 bei eingeschobenem Schieber 4 in Berührung kommen.

Für gewölbte Flächen des Gehäuses eines Handfunktelefons bietet sich amorphes, schlagunempfindliches Solarzellenmaterial an, das auf verschiedene Kunststoffe oder Metallflächen direkt aufgedampft werden kann. Letzteres Material reagiert gleich gut auf Sonnenwie auf Kunstlicht und erlaubt eine Ladung der Akkumulatoren bei für Solarzellen brauchbaren Wirkungsgraden zwischen 6 - 7 %. Im Hinblick auf unsere Umwelt dürfte eine Solar-Speisung in Kombination mit schadstoffreien Akkumulatoren (z.B. Nickel-Hydrid-Akkutyp) ein wichtiger Gesichtspunkt sein. Weiterhin kann durch den Einsatz von sogenannten Super- oder Goldkondensatoren die Kapazität und somit auch die Größe der Akkumulatoren in gewissem Maße reduziert werden.

Steht z.B. auf der Rückseite des Gehäuses eine Fläche mit den Abmessungen 115 x 50 mm für die Solarzelle 2 zur Verfügung und leistet das Solarmaterial 60 W pro m², so ergibt sich für die Solarfläche F = 57,5 cm² eine Spitzenleistung von 0,345 W. Angenommen es steht nur ein Fünftel der Einstrahlleistung, also etwa 70 mW, zur Verfügung, so reicht diese Energie aus, um einen Teil des Stand-by-Betriebes des Handfunktelefons 1 abzudecken.

Die Ausführung gemäß Fig. 2 mit Solarzelle 2 auf einem Schieber 4 hat noch den Vorteil, daß ein Kunde die Wahl hat zwischen einem Handfunktelefon ohne oder mit Solarzelle, d.h. er kann sich auch nachträglich noch zum Kauf des Schiebers 4 mit der Solarzelle 2 entscheiden und diesen anbringen, sofern am Gehäuse 10 die genannten Vorleistungen (Führungsschienen 3, Kontakte 6) erbracht sind. Außerdem ist der flache Schieber einfach zu fertigen, zu lagern, zu handhaben und am Handfunktelefon 1 bedarfsweise ohne weiteres austauschbar.

## Patentansprüche

1. Handfunktelefon mit einem Gehäuse und mit mindestens einem im Gehäuse untergebrachten Akkumulator als Stromversorgung,
**dadurch gekennzeichnet**, daß als weitere Stromquelle wenigstens eine Solarzelle vorhanden ist, die sich auf freien Flächen des Gehäuses (7, 10) befindet.

2. Handfunktelefon nach Anspruch 1,
dadurch gekennzeichnet, daß das fotovoltaisch reagierende Material der Solarzelle (2) direkt auf die Oberfläche des Gehäuses (7, 10) aufgebracht ist.

3. Handfunktelefon nach Anspruch 2,
dadurch gekennzeichnet, daß das fotovoltaisch reagierende Material der Solarzelle (2) sich auf der Rückseite des Gehäuses (7, 10) befindet.

4. Handfunktelefon nach Anspruch 2,
dadurch gekennzeichnet, daß das fotovoltaisch reagierende Material der Solarzelle (2) die Rückwand und zusätzlich wenigstens einen Teil (9) von Seitenwänden (8) des Gehäuses (7) bedeckt.

5. Handfunktelefon nach einem der vorhergehenden Ansprüche, dadurch gekennzeichnet, daß das fotovoltaische Material der Solarzelle (2) auf die Oberfläche des Gehäuses (7) aufgedampft ist.

6. Handfunktelefon nach Anspruch 1,
dadurch gekennzeichnet, daß sich die Solarzelle (2) auf einem Schieber (4) befindet, der in an der Rückseite des Gehäuses (10) angeformte Führungsschienen (3) eingesteckt ist und daß die Stromausgänge der Solarzelle (2) im eingeschobenen Zustand des Schiebers (4) Kontakte (6) des Gehäuses (10) berühren.

7. Handfunktelefon nach Anspruch 1,
dadurch gekennzeichnet, daß Goldkondensatoren zu den Akkumulatoren parallel geschaltet sind.
